# EUROPEAN PATENT APPLICATION

(11) **EP 3 611 002 A1**
(43) Date of publication of application: **19.02.2020**
(21) Application number: 18763200.5
(22) Date of filing: 07.05.2018
(51) Int. Cl.: B28B 11/12, B28D 1/00, B65G 19/02, B26D 5/20

(54) **PORTABLE LINEAR TRANSFORMER FOR LAMINATED GYPSUM BOARDS**

(30) Priority: 08.03.2017 ES 201700211; 24.07.2017 ES 201730879 U
(71) Applicant: Subirats Roca, Antonio, Barcelona 08016 (ES)
(72) Inventor: Subirats Roca, Antonio, Barcelona 08016 (ES)
(74) Representative: Espiell Gomez, Ignacio
(86) International application number: PCT/ES2018/070342
(87) International publication number: WO 2018/162786

(57) **Abstract**

Portable linear transformer for laminated gypsum boards, that comprises a central module (2) in a structure having a converting bridge (4) where different converting tools (5) are located, preferably incorporated on a runner (19) that allows to fasten them in different positions by means of screws with knob (20). The central module (2) preferably shows the precision calibration rollers, one of input (6) and the other of output (7), on which the board (P) to be converted slides and the lateral modules (3) with a series of easels (8), with carriage rollers (9) on which the said board (P) is supported and also slides, coplanar to the said input (6) and output (7) rollers. Preferably, the linear and hand-held converting machine also comprises two lateral modules (3) that are fastened on both sides of the central module (2).

## Description

### OBJECT OF THE INVENTION

The invention, as stated in the title of this specification, refers to a Portable linear transformer for laminated gypsum boards that provides the function to which it is designed, with advantages and characteristics, that are disclosed in details thereafter, which mean a significant novelty in the current state-of-art.

The object of this invention concretely refers to a linear and hand-held converting machine to carry out, in the site, any type of edges and figures in laminated plasterboard partitionings and false ceilings, for which it is configured as a modular device, that is assembled within a short period of time and is easily carried, that is based on the linear milling , at different angles, of the laminated plasterboards for their cutting and/or folding to the measures and angles necessary in the site, allowing a high capacity of production based on the linear sliding and milling of the laminated plasterboard by means of rollers. In addition, it possesses an open milling bridge, that confers a small size to the machine, allowing at same time to convert the whole surface of the board just by turning it, allowing to convert, in the site, the laminated plasterboard into any constructive or decorative figure: for example, crown mouldings, curtain rods, columns sheathing, varied edges, decorative cornices, luminaires, niches, mantlepieces, decorations and the like.

### FIELD OF APPLICATION OF THE INVENTION

The field of application of this invention is within the sector of construction, being concretely focused on the scope of the construction/decoration with laminated plasterboards, and more specifically in the machines and devices for converting laminated plasterboards.

### BACKGROUND OF THE INVENTION

Currently, the laminated plasterboards mostly are still being converted by hand, a system lacking of accurateness, that causes a large amount of waste and the drying times of the finishing pastes are very long.

Also, systems of mould and countermould, milling and others exist in factories having bulky, heavy machines and with high costs of production and carriage to the building site.

Therefore, the objective of this invention is to provide the market with a machine converting this type of boards that allows to carry out the said conversions in the site and that can be quickly and easily carried and installed.

On the other hand, and as reference to the current state-of-art, it shall be pointed out that, at least the applicant is not aware of the existence of any Portable linear transformer for laminated gypsum boards, or any other invention having a similar application, showing technical, structural and constructive characteristics equal or similar to those that the machine herein claimed possesses.

### EXPLANATION OF THE INVENTION

The Portable linear transformer for laminated gypsum boards proposed by the invention is therefore configured as a significant novelty within its field of application, because when implementing it the above-mentioned objectives are satisfactorily reached, the characterizing details making it possible and distinguishing it duly appear in the final claims attached to this description.

More concretely, what the invention proposes, as it was said above, is a hand-held machine to carry out, in the site, any type of linear conversions in laminated plasterboards of partitionings and false ceilings, having a modular nature, that is assembled within a short period of time and is easily carried, which allows the linear conversion of the board such as a milling or the linear cutting, at different angles of the laminated plasterboards for their cutting and/or folding of edges to the sizes and angles necessary in the site, to obtain different constructive or decorative figures; for example, crown mouldings, curtain rods , columns sheathing, varied edges, decorative cornices, luminaires, niches, mantlepieces, decorations and the like

Despite it is small-sized, it allows a high capacity of production thanks to sliding and converting the laminated plasterboard by means of rollers, and linearly.

In addition, it possesses an open bridge, where it incorporates the converting tools, that its small size allows, allowing at the same time to convert the full surface of the board just by turning it.

The machine of the invention comprises three parts or modules, couplable to each other, a body or central module and two lateral modules that are fastened on both sides of the central module.

The central module, consisting in a tubular structure of welded steel, incorporates a converting bridge on which different systems of conversion, milling, cutting, suction..., as well as precision calibration rollers can be located, one of input and the other of output, on which the board slides during the conversion process, comprising likewise a carrying wheel that allows to easily move the said module to the suitable location.

On their hand, the lateral modules incorporate a series of easels having adjustable rollers on which the board to be converted is supported and slides.

The fastening of the said modules is carried out, preferably, by telescopic assembly of rails, with screws that trap them on the body of the central module, allowing to configure the set to the suitable length according to the size of the board. In the same way, the easels with rollers are adjustable along the said rails, to be able to fasten them at the suitable position.

In the assembly of the set, in addition, levelling bases, adjustable in height, ends of rails, likewise adjustable and rear buffer stops fastening and aligning the set have been provided.

It shall also be pointed out that the converting elements the machine incorporates on the bridge are slidable and allow to be fastened to it in different positions by means of screws with knob.

Preferably, a standard market electroportable milling machine appears within the sliding mechanism of the bridge to which an air nozzle is coupled to force the suction of the waste of the laminated plasterboard resulting from milling. A cutting system and an air injecting system are likewise located.

In addition, at the end of the central module, in the front part on the conversion bridge, the installation of a height adjustable top wheel is envisaged, facing another fixed lower wheel that is located at the open end of the said bridge in line with the input and output rollers. These wheels allow to adjust the conversion bridge to the thickness of the laminated plasterboard to be converted preventing the bridge vibration when it is being converted.

This way, the main advantages of the converting machine, in addition to its easy carriage and mounting in the site, and to allow incorporating different milling and cutting systems, are: the open conversion bridge, that means an innovation as it reduces to the half the size of the said bridge, that allows to convert the board on its full surface just by turning it about itself; the system guiding and introducing the material in the central module, that was designed in order that centring the laminated plasterboard is facilitated by gravity because the working plane of the full device has been tilted to that end; the laminated plasterboard cutting system by means of a knife or a saw, that can be slided and fixed at the exact necessary position on the bridge of the central module; the lateral modules of introduction to / exit from the laminated plasterboards to the conversion central module, the set of guideways of which has different profiles and diameter to which roller easels are assembled rollers that can be located in different positions to be able to convert boards having any length, allowing to convert laminated plasterboard of any length and thickness with the minimum effort, either by hand or motor driven, thanks to the assistance of precision bearings in the rollers and to the gravity due to the tilt of the working plane; and, last, its system of air injection and suction of the waste produced when converting the boards to achieve the removal of any particle of dust resulting from the conversion, comprising an overpressure system in the suction chamber of the milling system preventing, with a minimum airflow, the exit of the dust out of the conversion by the groove resulting in the board when passing through the central module.

The converting machine therefore carries out longitudinal and transverse slots and cuttings, with different angles, for the further folding and conversion of the laminated plasterboards into linear, constructive and decorative figures, being constituted as a hand-held modular structure that provides, the sector of construction, with a tool having high capacity of production, thanks to the arrangement of the rollers that allow a linear production of figures without interruption between boards and without the drawbacks of heavy and bulky machines.

Another characteristic to be pointed out, is the open design of the bridge of conversion of the central module, that allows to convert boards having any size and thickness as well lengthwise as crosswise.

Thus, the converting machine provides the advantages in the site, of the figures, without the traditional drawbacks: long drying time, sanding dust, waste of fillers, scraps, poor quality finishes, waiting times to carry out figures in the factory, and others.

The laminated linear and hand-held converting machine disclosed therefore consists of an innovating structure having characteristics unknown until now for the purpose to which it is designed, reasons that jointly to its practical utility, provide it with sufficient ground to obtain the privilege of exclusivity applied for.

### DESCRIPTION OF THE DRAWING

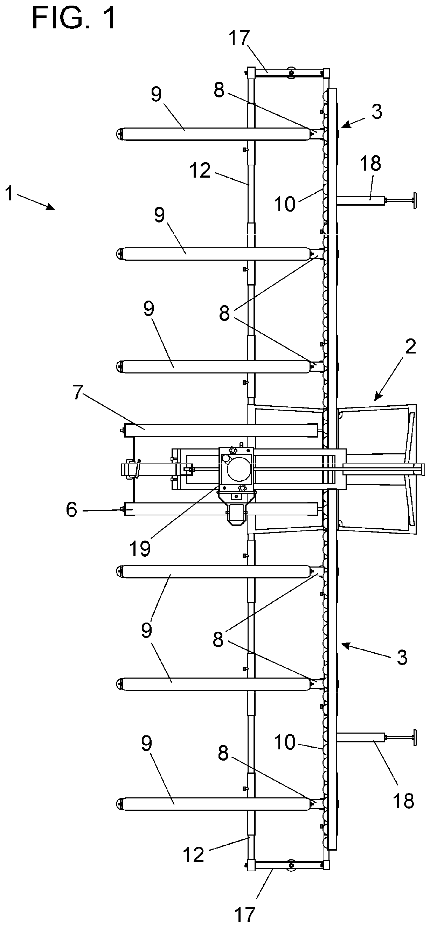

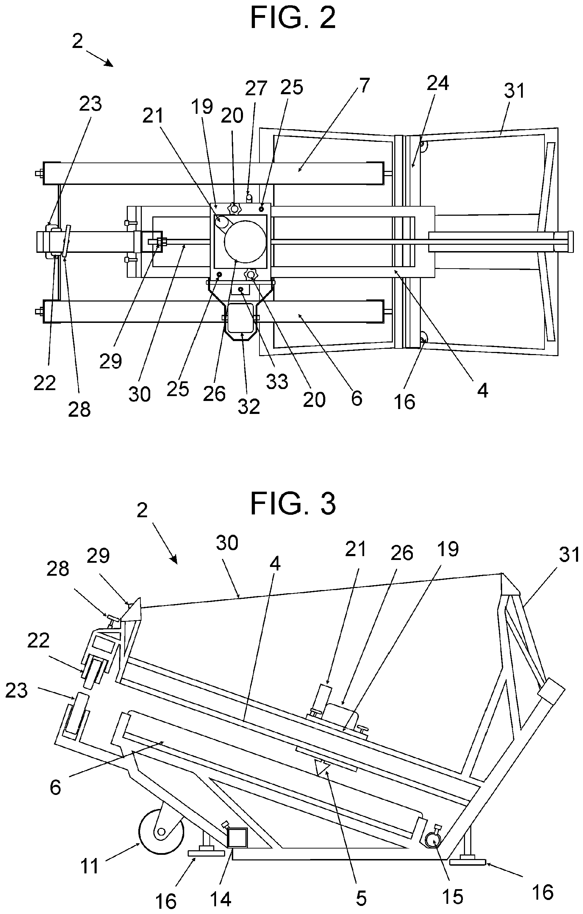

To complement the description that is been carried out and in order to assist to best understanding the characteristics of the invention, attached to this specification as an integral part thereof, there is a set of drawings in which for illustration and no limiting purpose the following has been represented:
The figure number 1.- It shows a schematic top view of the converting machine, object of the invention, with its three parts assembled, its general configuration and the main elements it comprises can be seen;
The figure number 2.- It shows an enlarged top plan view of the central module that forms the main part of the machine of the invention, according to the example shown in the figure 1;
The figure number 3.- It shows a lateral elevation view of the central module of the machine appearing in the figure 2;
The figure number 4.- It shows a lateral elevation view of one of the easels having rollers provided in the carriage modules for the introduction of a board in the central module;
The figures numbers 5-A and 5-B.- They show a lateral elevation view and a plan view respectively, of the ends of the lateral carriage modules that close and level the rails;
The figures number 6-A and 6-B.- They show an elevation view and a plan view, respectively, of the rear bumper stops of the rails that line up and fasten the set of modules;
The figures number 7-A and 7-B.- They show a lateral elevation view and a plan view respectively, of the front rail assembling the easels of the carriage modules;
The figures numbers 8-A and 8-B.- They show a lateral elevation view, and a plan view, respectively, of the rear rail assembling the easels of the carriage modules;
the figures number 9-A and 9-B.- They show a lateral elevation view and a plan view, respectively, of the rear profile of mini rollers; and
the figures number 10-A, 10-B, 10-C, 10-D, 10-E, 10-F, 10-G, 10-H, 10-1. 10-J and 10-K- They show examples of views in perspective of different figures that can be made in laminated plasterboard with the converting machine object of the invention.

### PREFERRED EMBODIMENT OF THE INVENTION

Seen the mentioned figures, and according to the numbering adopted in them, a no limiting example of the Portable linear transformer for laminated gypsum boards of the invention, that comprises the parts and elements mentioned and disclosed in details below, each of them having being designed according to the following list:
1. converting machine
2. central module
3. lateral modules
4. converting bridge
5. converting tools
6. roller of input to the central module
7. roller of output from the central module
8. easels
9. carriage rollers
10. profile of mini-rollers
11. carrying wheel
12. front rail
13. rear rail
14. front sheath
15. rear sheath
16. levelling bases
17. ends of rail
18. rear bumper stops
19. runner
20. screw with knob
21. suction nozzle
22. top wheel adjustable in height
23. fixed lower wheel
24. coupling rear support of the profile mini-rollers
25. runner fastenings
26. runner capsule
27. air intake hole of the air injection system,
28. top wheel regulation handle
29. drawbolt tensioner
30. drawbolt to calibrate the converting bridge
31. rear frame of the structure of the central module (2)
32. lateral wheel with adjustable pressure
33. clamping screw
P. plasterboard to be converted

Thus, as it can be seen in the said figures, the converting machine (1) of the invention essentially comprises three modules couplable to each other, one central (2) and two lateral modules (3) that are fastened to both sides of the central one (2), the said central module (2) consisting in a tubular structure of welded steel with a converting bridge (4) where different converting tools (5) can be located.

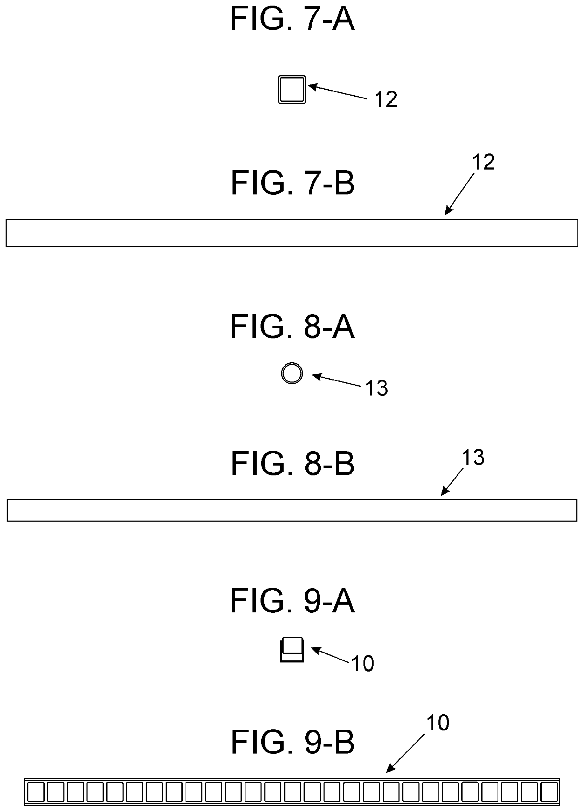

Preferably, this central module (2) possesses precision calibration rollers, one of input (6) and another of output (7), on which the board to be converted slides (P), while the lateral modules (3) show a series of easels (8), with carriage rollers (9) on which the board (P) to be converted is supported and slides in the lateral modules (3), prior and further to its input to or output from the central module (2) on the rollers of input (6) and of output (7) thereof, that are coplanar those of carriage (9), the rollers being arranged ones and the others on a tilted plane, so that the board (P) tends by gravity to move towards the lower part thereof and, therefore towards the rear part of the modules (2, 3), being supported on the lateral modules (3) on a profile of mini-rollers (10) provided to that purpose, that can be seen in the figures 9-A, 9-B.

Preferably, the easels (8) with the carriage rollers (9) are adjustable with respect to the central module (2) to locate them at a distance thereof suitable according to the sizes of the board (P) in each case.

The central module (2) possesses a carrying wheel (11) to facilitate the travel of the said module in the site before coupling the lateral modules (3) to it.

The fastening of the said lateral modules (3) to the central module (2) is preferably carried out by means of the telescopic assembly of the two rails, a front one (12) and a rear one (13) that are inserted in respective front sheath (14) and rear sheath (15) of the structure of the central module (2) and of the easels (8) provided to that purpose, been fastened with screws that trap them on the body of the said central module (2), allowing to configure the set to the suitable length according to the size of the board (P). Preferably, as it is shown in the figures 7-A, 7-B and 8-A, 8-B, the front rail (12) and its related sheath (14) has a square section, while the rear rail (13) and its related sheath (15) has a circular section.

In the same way the easels (8) with carrying rollers (9) are adjustable to the length of the rails (12, 13), to be able to fasten them in the best suitable position.

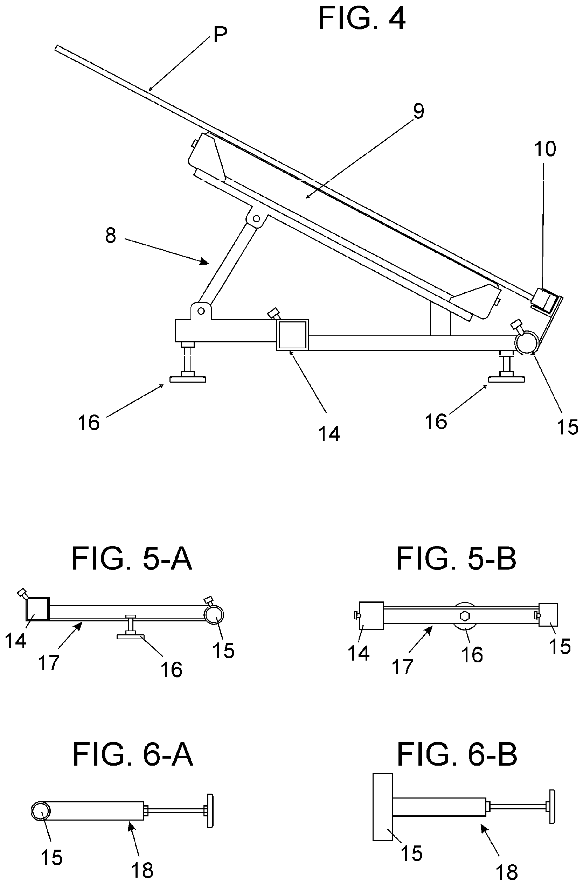

In addition, to assemble the set, levelling bases (16) adjustable in height has been provided, located at the front and rear part of the central module (2) and of each of the easels (8), as well as final rails (17), also adjustable, the configuration of which can be seen in the figures 5-A and 5-B, comprising front (14) and rear (15) sheaths and levelling base (16), and rear bumper stops (18) to fastening and aligning the set, that can be seen in the figures 6-A and 6-B, that likewise comprises a rear sheath (15) for their coupling to the related rear rail (13) of the lateral modules (3).

On its hand, the converting tools (5), such as those for milling and cutting, the converting machine (1) of the invention incorporates on the converting bridge (4) are located on a runner (19) that allows to fasten them in different positions by means of the due screws with knob (20).

Preferably, the said converting tools (5) are coupled to an air suction nozzle (21), as well as to a system of air injection.

In addition, in the front area of the central module (2) at the end of the converting bridge (4), there is a top wheel adjustable in height (22), facing a fixed lower wheel (23) located in line with the input (6) and output (7) rollers of the said central module (2), the wheels of which allow to adjust the opening of the converting bridge (4) to the thickness of the laminated plasterboard (P) to be converted.

According to the figures 2 and 3, the elements comprised in the central module (2), can be seen with further details consisting in a rear support (24) on which the profile of mini-rollers (10) is coupled, two screws with knob (20) to secure the position of the runner (19) of the tools (5) at the suitable place of the converting bridge (4) and two fastenings (25) to secure the capsule (26) of the runner (19) in which the said converting tools (5) are coupled, the hole of air intake (27) of the air injection system, the suction nozzle (21), the lower fixed wheel (23) and the top wheel (22) adjustable in height for the calibration of the board (P) and the handle (28) to regulate in height the said top wheel (22).

The converting machine (1) also shows a tensioner (29) of the drawbolt (30) to calibrate the converting bridge (4) that joins the front end thereof to the calibration wheels (22, 23), and the rear end where the structure of the central module (2) rises in a frame (31), a lateral wheel (32) of adjustable pressure by means of a tightening screw (33) that puts pressure on the board (P) against the input roller (6) located under the said lateral wheel (32).

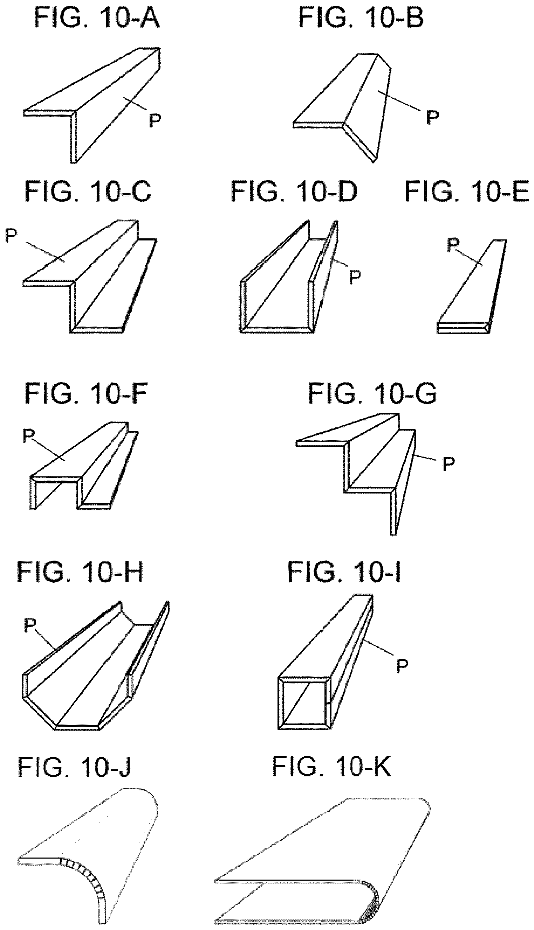

According to the figures 10-A to 10-I several examples of figures embodiable in laminated plasterboard with the converting machine (1) object de la invention can be seen.

Concretely, the figure 10-A shows a board (P) to which a milling in angle of 90º degrees has been carried out; the figure 10-B shows a board (P) with a milling in angle of 120º degrees; the figure 10-C a board (P) with two millings at staggered 90º degrees ; the figure 10-D a board (P) with two millings at 90º degrees forming a U for lining installations; the figure 10-E a board (P) with two millings at 90º degrees, the board been folded on itself; in the figure 10-F the board (P) with three millings at 90º degrees to carry out curtain rods; the figure 10-G shows the board (P) with three millings staggered at 90º degrees; the figure 10-H shows the board (P) with four millings at 120º degrees for sheaths of columns and installations; and, last, the figure 10-I, shows the board (P) with four millings at 90º degrees for sheaths of ducts or columns. The figures 10-J and 10-K shows figures with multiple cuttings that allow when the board is folded to achieve curved shapes.

The nature of this invention being sufficiently disclosed, as well as the way to embody it, it is not deemed necessary to extend any longer its explanation in order that any person skilled in the art understands its extent and the advantages arising from it, and it is pointed out that , within its essence, it can be carried out in other embodiments that differ in details from the stated for example purpose , and to which shall also extend the protection sought, provided that its main principle is not altered, changed, or modified.

## Claims

1. Portable linear transformer for laminated gypsum boards **characterized in that** it comprises a central module (2) in a structure with a converting bridge (4) where different converting tools (5).

2. Portable linear transformer for laminated gypsum boards according to any of the preceding claims, **characterized in that** it comprises in addition two lateral modules (3) that are fastened on both sides of the central module (2).

3. Portable linear transformer for laminated gypsum boards according to the claim 2, **characterized in that** the central module (2) shows two precision calibration rollers, one of input (6) and another of output (7), on which the board (P) to be converted slides and the lateral modules (3) with a series of easels (8), with carrying rollers (9) on which the said board (P) is also supported and slides, coplanar to the said input (6) and output (7) rollers (6) .

4. Portable linear transformer for laminated gypsum boards according to the claim 3, **characterized in that** the input (6) and output (7) rollers of the central module (2) and the carriage rollers (9) of the easels (8) are arranged in a tilted plane, so that the board (P) tends by gravity to move towards the lower part thereof and, therefore, towards the rear part of the modules (2, 3).

5. Portable linear transformer for laminated gypsum boards according to the claims 2 and 4, **characterized in that** the lateral modules (3) show a profile of mini-rollers (10) in its rear part on which the board (P) is supported by gravity.

6. Portable linear transformer for laminated gypsum boards according to any of the claims 3 to 5, **characterized in that** the easels (8) with the carriage rollers (9) are adjustable with respect to the central module (2) to locate them at the distance from it suitable according to the sizes of the board (P) in each case.

7. Portable linear transformer for laminated gypsum boards according to any of the preceding claims, **characterized in that** the central module (2) possesses a carrying wheel (11).

8. Portable linear transformer for laminated gypsum boards according to any of the claims 3 to 7, **characterized in that** the fastening of the lateral modules (3) to the central module (2) is carried out by means of the telescopic assembly of two rails, a front (12) and a rear (13) rails that are inserted in respective front (14) and rear (15) sheaths of the structure of the central module (2) and of the easels (8) provided to that purpose.

9. Portable linear transformer for laminated gypsum boards according to claim 8, **characterized in that** the front rail (12) and its related sheath (14) has a square section, while the rear rail (13) and its related sheath (15) has a circular section.

10. Portable linear transformer for laminated gypsum boards according to any of the claims 3 to 9, **characterized in that** the easels (8) with carriage rollers (9) are adjustable along the rails (12, 13), to be able to fasten them in the suitable position.

11. Portable linear transformer for laminated gypsum boards according to any of the preceding claims, **characterized in that** the easels (8) comprise levelling bases (16) adjustable in height, located in the front and rear parts of the central module (2).

12. Portable linear transformer for laminated gypsum boards according to any of the claims 7 to 9, **characterized in that** the rails (12 and 13) comprise adjustable rail ends (17) and rear bumper stops (18) for fastening and aligning the set.

13. Portable linear transformer for laminated gypsum boards according to any of the preceding claims, **characterized in that** the converting tools (5) of the converting bridge (4) are incorporated on a runner (19) that allows to fasten them in different positions by means of screws with knob (20).

14. Portable linear transformer for laminated gypsum boards according to any of the preceding claims, **characterized in that** the converting tools (5) have an air suction nozzle (21) coupled, and air injection means.

15. Portable linear transformer for laminated gypsum boards according to any of the preceding claims, **characterized in that** in the front area of the central module (2), at the end of the converting bridge (4), a top wheel (22) is provided adjustable in height facing a fixed lower wheel (23) located in line with the input (6) and the output (7) rollers of the said central module (2), to adjust the opening of the converting bridge (4) to the thickness of the laminated plasterboard to be converted.

## Amended claims

### Amended claims under Art. 19.1 PCT

1. Portable linear transformer for laminated gypsum boards **characterized in that** it comprises a central module (2) in a structure with a converting bridge (4) where different converting tools (5), and because the converting bridge (4) is opened at one of its ends allowing the passage of the board (P) laminated gypsum through the opening of the converting bridge (4).

2. Portable linear transformer for laminated gypsum boards, according to claim 1, **characterized in that** the working plane is tilted tends by gravity to move towards the lower part of it and, consequently, towards the back of the central module (2).

3. Portable linear transformer for laminated gypsum boards according to any of the preceding claims, **characterized in that** it comprises in addition two lateral modules (3) that are fastened on both sides of the central module (2).

4. Portable linear transformer for laminated gypsum boards according to the claim 2, **characterized in that** the central module (2) shows two precision calibration rollers, one of input (6) and another of output (7), on which the board (P) to be converted slides and the lateral modules (3) with a series of easels (8), with carrying rollers (9) on which the said board (P) is also supported and slides, coplanar to the said input (6) and output (7) rollers (6) .

5. Portable linear transformer for laminated gypsum boards according to the claim 3, **characterized in that** the input (6) and output (7) rollers of the central module (2) and the carriage rollers (9) of the easels (8) are arranged in a tilted plane, so that the board (P) tends by gravity to move towards the lower part thereof and, therefore, towards the rear part of the modules (2, 3).

6. Portable linear transformer for laminated gypsum boards according to the claims 2 and 4, **characterized in that** the lateral modules (3) show a profile of mini-rollers (10) in its rear part on which the board (P) is supported by gravity.

7. Portable linear transformer for laminated gypsum boards according to any of the claims 3 to 5, **characterized in that** the easels (8) with the carriage rollers (9) are adjustable with respect to the central module (2) to locate them at the distance from it suitable according to the sizes of the board (P) in each case.

8. Portable linear transformer for laminated gypsum boards according to any of the preceding claims, **characterized in that** the central module (2) possesses a carrying wheel (11).

9. Portable linear transformer for laminated gypsum boards according to any of the claims 3 to 5, **characterized in that** the fastening of the lateral modules (3) to the central module (2) is carried out by means of the telescopic assembly of two rails, a front (12) and a rear (13) rails that are inserted in respective front (14) and rear (15) sheaths of the structure of the central module (2) and of the easels (8) provided to that purpose.

10. Portable linear transformer for laminated gypsum boards according to claim 8, **characterized in that** the front rail (12) and its related sheath (14) has a square section, while the rear rail (13) and its related sheath (15) has a circular section.

11. Portable linear transformer for laminated gypsum boards according to any of the claims 3 to 9, **characterized in that** the easels (8) with carriage rollers (9) are adjustable along the rails (12, 13), to be able to fasten them in the suitable position.

12. Portable linear transformer for laminated gypsum boards according to any of the preceding claims, **characterized in that** the easels (8) comprise levelling bases (16) adjustable in height, located in the front and rear parts of the central module (2).

13. Portable linear transformer for laminated gypsum boards according to any of the claims 7 to 9, **characterized in that** the rails (12 and 13) comprise adjustable rail ends (17) and rear bumper stops (18) for fastening and aligning the set.

14. Portable linear transformer for laminated gypsum boards according to any of the preceding claims, **characterized in that** the converting tools (5) of the converting bridge (4) are incorporated on a runner (19) that allows to fasten them in different positions by means of screws with knob (20).

15. Portable linear transformer for laminated gypsum boards according to any of the preceding claims, **characterized in that** the converting tools (5) have an air suction nozzle (21) coupled, and air injection means.

16. Portable linear transformer for laminated gypsum boards according to any of the preceding claims, **characterized in that** in the front area of the central module (2), at the end of the converting bridge (4), a top wheel (22) is provided adjustable in height facing a fixed lower wheel (23) located in line with the input (6) and the output (7) rollers of the said central module (2), to adjust the opening of the converting bridge (4) to the thickness of the laminated plasterboard to be converted.
